(19) Europäisches Patentamt
European Patent Office
Office européen des brevets

(11) **EP 4 109 706 A1**

(12) **EUROPEAN PATENT APPLICATION**

(43) Date of publication:
**28.12.2022 Bulletin 2022/52**

(21) Application number: **21305867.0**

(22) Date of filing: **23.06.2021**

(51) International Patent Classification (IPC):
***H02J 7/00*** *(2006.01)*

(52) Cooperative Patent Classification (CPC):
**H02J 7/00036; H02J 7/0029; H02J 7/0045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Energysquare**
**94160 Saint-Mandé (FR)**

(72) Inventors:
- **LOLLO, Daniel**
  **75013 PARIS (FR)**
- **VASQUEZ, Pablo**
  **94160 SAINT-MANDÉ (FR)**
- **POLTI, Alexis**
  **94160 SAINT MANDE (FR)**

(74) Representative: **Atout PI Laplace**
**Immeuble "Visium"**
**22, avenue Aristide Briand**
**94117 Arcueil Cedex (FR)**

(54) **METHOD FOR DETECTING THE PRESENCE OF A FOREIGN CONDUCTIVE OBJECT ON THE CHARGING SURFACE OF A CHARGING DEVICE**

(57) The invention relates to a method for detecting the presence of a foreign conductive object (12) on the charging surfaces of a charging device (1), said charging surfaces (2, 3) being configured to cooperate with a reporting device (4) equipped with at least two power terminals (5, 6) so as to have a contact between the reporting device's power terminals (5, 6) and at least two charging device's charging surfaces (2, 3), the method comprising the steps of:

a) providing an appropriate power to the conductive charging surfaces (2, 3) so as to charge an article (7) connected to the reporting device (4);

b) while providing said appropriate power, putting one of said charging surfaces (2, 3) in a determined impedance state, and measuring a voltage temporal evolution across said charging surfaces (2, 3) while said charging surfaces (2, 3) is put in said determined impedance state;

the presence of the foreign conductive object (12) being determined based on said measure.

FIG. 1

**Description**

The invention relates to the field of energy transfer. More particularly, the invention relates to a method for detecting the presence of a foreign conductive object on the charging surfaces of a charging device, which can be used in conductive wireless charging systems.

Wireless power transmission eliminates the use of wires during the charging process of electronic devices, which is more convenient for the users.

Inductive wireless charging, which is one of the known solutions of wireless power transmission, has two disadvantages: firstly, an imperfect alignment between the transmitter and the receiver has an influence on the efficiency of the charge; secondly, the technology requires particular care in the design so as to reduce interferences.

The aforementioned disadvantages are not met with conductive wireless charging. It requires the use of a charging device as a power transmitter to deliver the power, and a reporting device to receive the power.

The charging device is made of conductive charging surfaces (or tiles) monitored by a transmitting circuit, controlled by a detection algorithm and a charge monitoring system. The reporting device is a device equipped with two conductive electrodes, monitored by a receiving circuit, connected to the device's battery.

The technology works through the contact between the reporting device's electrodes and the charging device's conductive charging surfaces. The charging device detects the reporting device, communicates with it and activates the appropriate power (maximum current, under a predefined voltage).

The article to be charged may be for example a communication device such as a laptop, a Smartphone, or, more generally, a portable device which comprises a battery which needs to be frequently charged, or a device with no battery that just needs regular supply, such as LED lightning.

The technology has been disclosed in the document WO 2017/046458 A1, which is hereby incorporated by reference. When an article is in contact, through the reporting device, with the charging device, two conductive charging surfaces of the charging device (also referred to as tiles) are polarized, which means that there is a potential difference between the supply lines of both conductive charging surfaces.

Therefore, a foreign conductive object having a relatively high equivalent resistance, which would be unintentionally laid between the conductive charging surfaces, would capture a part of the current emitted for charging the device, which may provoke an overheating of the foreign conductive object.

For example, when the charging device is embedded in a table of a desk, a metallic clip may unfortunately be laid on the same conductive charging surfaces of the table than those which are used for charging the operational unit.

Patent application WO 2013/036947 A2 discloses a foreign object debris detection system for a wireless energy transfer system. The detection of debris relies on sensing the magnetic field of the wireless energy transfer system. The proposed solution is adequate for inductive wireless charging, but could not be applied to conductive wireless charging.

Hot-swap circuits, which are for example disclosed in the document "Advantages of IC-Based Hot-Swap Circuit Protection" (Tutorials 2158, Maxim Integrated), available under the link https://www.maximintegrated.com/en/design/technical-documents/tutorials/2/2158.html, have built-in and adjustable current limiting which prevents damage to the power supply and which prevents also the circuit being powered during a hot-swap event.

Conductive wireless charging solutions, such as the one disclosed in the document WO 2017/046458 A1, can provide, in specific embodiments of the solution, a voltage between 5 and 20 V, and the operational unit has a nominal consumption of approximately 3 to 5 A, depending on the electrical features of the device.

With this in mind, a hot-swap circuit having an inrush current limit of 1 or 2 A would surely be fast enough to avoid overheating in the foreign conductive object, but the protection would always be triggered for devices to charge having a nominal consumption of approximately 3 to 5 A. Besides, a hot-swap circuit having a higher inrush current limit would have a slower reaction time, which would not avoid the appearance of visible phenomena.

Most of the over-current protection circuits integrate a resistance on the positive or negative line. Therefore, an amplifier must be added with significant voltage and sensibility, bringing complexity and cost very high.

Also, if the foreign object has a high equivalent resistance, it may draw only a few mA which is not enough to be detected by any hot-swap or current surge protection circuit. However, it is enough to overheat a small conductor.

Therefore, there is a need to overcome the aforementioned drawbacks. In particular, there is a need to provide a method for detecting the presence of a foreign conductive object on the charging surfaces of operational unit, which prevents potential problems such as an overheating of the charging surfaces, with a limited cost and complexity.

It is proposed, according to one aspect of the invention, a method for detecting the presence of a foreign conductive object on the charging surfaces of a charging device, said charging surfaces being configured to cooperate with a reporting device equipped with at least two power terminals so as to have a contact between the reporting device's power terminals and at least two charging device's charging surfaces, the method comprising the steps of:

> a) providing an appropriate power to the conductive charging surfaces so as to charge an article connected to the reporting device;

b) while providing said appropriate power, putting one of said charging surfaces in a determined impedance state, and measuring a voltage temporal evolution across one of said charging surfaces while one of said charging surfaces is put in said determined impedance state; the presence of the foreign conductive object being determined based on said measure.

The invention also relates to a method for transferring power supply information from a reporting device comprising two power terminals to a charging device equipped with charging surfaces, during the charge of an article connected to the reporting device, said charging surfaces being configured to cooperate with the power terminals so as to have a contact between them, the method comprising the steps of:

a') charging an article according to predefined power supply requirements, the article being charged by the charging device through the reporting device;
b') while charging the article, modifying the predefined power supply requirements by putting one of said charging surfaces in a determined impedance state, the reporting device modifying its impedance towards the power terminals, the modification of the impedance depending on the power supply requirements to be modified, and measuring a voltage temporal evolution across the charging surfaces while one of said charging surface is in said determined impedance state.

The invention also relates to a computer program product comprising computer-executable instructions to cause a computer system to carry out a predefined method.
The invention also relates to a charging device, comprising a plurality of conductive charging surfaces configured to cooperate with a reporting device equipped with at least two power terminals so as to have a contact between the reporting device's power terminals and at least two charging device's charging surfaces, the charging device being configured to provide an appropriate power to an article through the reporting device, said charging device being configured to put one of said charging surfaces in a determined impedance state while providing said appropriate power, said charging device comprising a voltage measure circuit to measure a voltage temporal evolution across said charging surfaces while one of said charging surfaces is put in said determined impedance state, said charging device (1) being configured to detect the presence of a foreign conductive object on the charging device's charging surfaces based on said measure.
The invention also relates to a system for transferring power supply information from a reporting device to a charging device, said reporting device being configured to be connected to an article so as to charge said article and comprising two power terminals, said charging device being equipped with charging surfaces, said charging surfaces being configured to cooperate with the power terminals so as to have a contact between them, the charging device being configured to put one of said charging surfaces in a determined impedance state while charging the article, the reporting device modifying the predefined power supply requirements by putting one of said charging surfaces in a determined impedance state, the reporting device being configured to modify its impedance towards the power terminals, possibly at any time during charge, the modification of the impedance depending on a power supply requirements to be modified, the charging device being configured to measure a voltage temporal evolution across the charging surfaces while one of said charging surfaces is in said determined impedance state.
The accompanying drawings, which are incorporated in and constitute a part of this specification, illustrate various embodiments of the invention and, together with the general description of the invention given above, and the detailed description of the embodiments given below, serve to explain the embodiments of the invention:

Figures 1 illustrates a system for conductive wireless charging, comprising a current surge protection circuit for detecting a foreign conductive object.

Figure 2 illustrates in detail the charging device.

Figure 3 illustrates an implementation of the current surge protection circuit.

Figure 4 illustrates an example of the current across the inductor in the current surge protection circuit.

Figure 5 illustrates a method according to the invention.

Figure 6 illustrates in detail a reporting device.

Figure 7 illustrates a simplified equivalent schematic for detecting a foreign conductive object, according to the invention.

Figures 8, 9 and 10 illustrate the negative tile voltage curve for different kinds of foreign conductive objects.

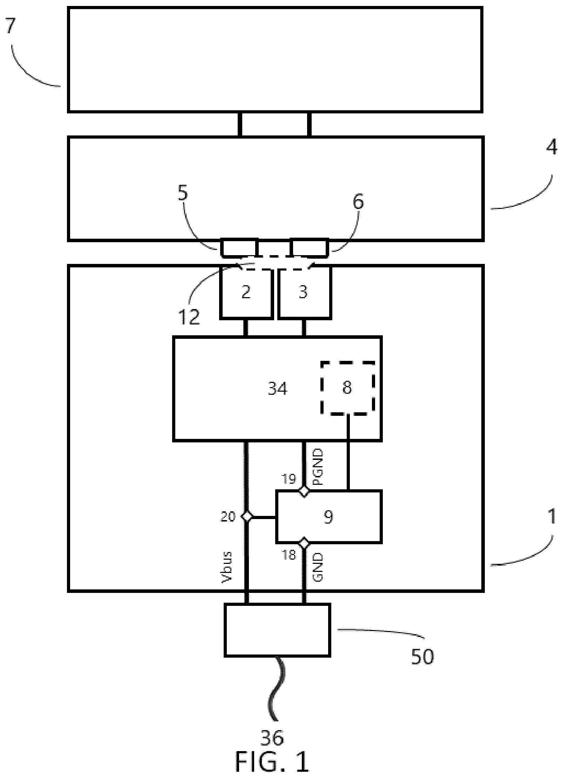

Figure 1 illustrates a charging device 1, which cooperates with a reporting device 4 of a conductive wireless charging system. An AC source 36 provides energy to a power delivering 50.

The "charging device" may embed the power delivering 50 or it may be plugged to the power delivering 50 located outside the charging device.

The charging device 1 comprises at least two conductive charging surfaces 2, 3, and a potential difference between the supply lines of both conductive charging surfaces is applied. On figure 1, the supply lines of the charging surfaces 2, 3 are referred to as Vbus (first supply line) and GND/PGND (second supply line), which means that the first charging surface 2 is polarized with a potential which is higher than the polarization voltage of the second charging surface 3.

The reporting device 4 comprises at least two power terminals 5, 6 so as to have two distinct contacts between the power terminal 5 and charging device's charging surface 2, and between the power terminal 6 and charging device's charging surface 3.

The reporting device 4 may be embedded in the article 7. Alternatively, the article 7 may be plugged to an external support which embeds the reporting device 4, as disclosed in the document WO 2017/046458 A1.

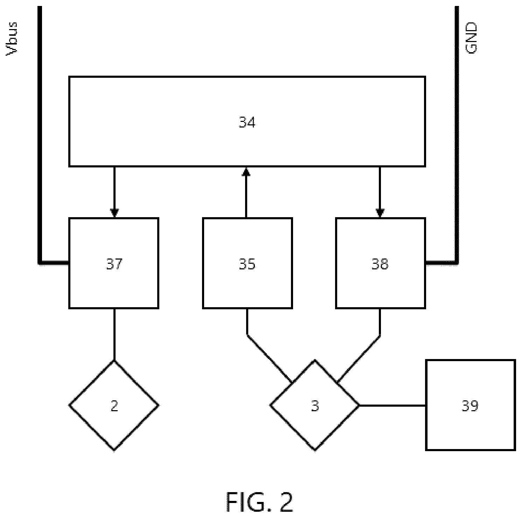

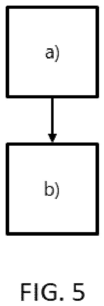

The charging device 1 and the reporting device 4 are respectively illustrated more in detail in figures 2 and 5.

The charging device 1 comprises a coupling manager 34 which is equipped with a charging processor 8 which manages the connection detection, the selection of the power line, ground line, communication and sensors.

On figure 1, the charging device 1 comprises a current surge protection circuit 9, but that component is not required for implementing the invented method.

It is not essential that the charging processor 8 is located in the charging device 1. The skilled person could conceive the invention with a charging processor 8 which would be located outside the charging device 1.

When the electrodes 5, 6 of the reporting device 4 are in contact with two conductive charging surfaces 2, 3, the coupling manager 34 is noticed that current must be provided to the device 7.

The coupling manager 34 is informed of the power which is required by the article 7, i.e. maximum current and voltage.

On figure 2, the coupling manager 34 sends a switching signal to the Vbus switch 37 so as to connect the detected conductive charging surfaces 2 to Vbus. The coupling manager 34 also sends a switching signal to the GND switch 38 so as to connect the other detected conductive charging surfaces 3 to GND. Thus, the detected conductive charging surfaces 2, 3 are polarized with a differential voltage (Vbus - GND), provided by the AC source 36 through the power delivering 50.

The charging device 1 may also embed an external communication unit, so that the user may control the charging process, and connectors.

The charging device 1 may also comprise a voltage measure circuit 35, which provides, as a feedback, a voltage of the conductive charging surface.

If the foreign conductive object 12 has a relatively high equivalent resistance, it will generate, in most cases, a low current surge and no visible heating phenomenon (such as sparks), but the charging process needs to be interrupted, in order to avoid a potential hazard such as an excessive heating of the foreign conductive object 12. Therefore, the protection can be relatively slow to react.

The invented method is directed to a procedure which may be implemented by the coupling manager 34, in order to detect a foreign conductive object which has a relatively high equivalent resistance.

In a first step a) of the method (figure 5), an appropriate power is provided to the conductive charging surfaces (2, 3). The appropriate power (maximum current and voltage) is determined by the coupling manager 34, based on a communication between the article 7 and the coupling manager 34.

In a second step b) (figure 5), the coupling manager 34 puts one of the charging surfaces (2, 3) in a determined impedance state, which means that one of the charging surfaces (2, 3) is disconnected from the GND or Vbus line, depending on the considered charging surfaces (2, 3). For that, the coupling manager 34 sends a switching signal to the Vbus switch 37 or to the GND switch 38 (figure 2). During the time lapse of a determined impedance state (such as high impedance), the coupling manager 34 measures a voltage across the charging surface (2, 3), by means of a voltage measure circuit 35.In a preferred embodiment of the invention, illustrated by figure 2, the voltage across the negative charging surface is converted in a digital signal so that the coupling manager 34 derives the presence of the foreign conductive object 12 based on the digital signal.

In a preferred embodiment, the determined impedance state is a relatively high impedance state, compared to the impedance of the reporting device 4, and to the impedance of the foreign conductive object 12.

In another embodiment, one of the charging surfaces (2, 3) is cyclically put in a determined impedance state.

The determined impedance state is obtained by means of a Thevenin impedance adapter 39, which is a component which defines the impedance of the charging surface when the latter is neither connected to Vbus or GND, nor to any foreign electrical circuit.

For example, every 100 ms, the negative charging surface, i.e. the one which is connected to the GND line, is disconnected from PGND during 10 $\mu$s. The procedure is implemented at a cycle of 0.01 %. Therefore, the disconnection is very fast, and the duty cycle (time span of determined impedance state vs. time span of connection) is determined such that the charging process is not stopped.

Besides, the devices to be charged usually have internal capacitors in case of micro-voltage drops, thus the invented method is transparent for the operational unit.

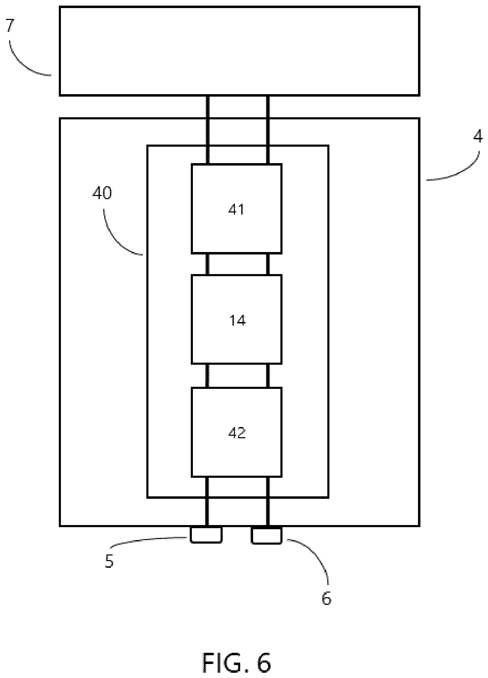

The method takes advantage of the internal structure of the reporting device 4, as illustrated by figure 6. The reporting device 4 comprises a circuit 40 for managing the inputs and outputs of the reporting device 4.

Indeed, the reporting device 4 is equipped with an impedance blocker 14 between the two power terminals (5, 6) and the rest of the receiver circuit 41. The impedance blocker 14 disconnects the downstream circuit during the determined impedance state.

Therefore, between both power terminals (5, 6), the equivalent impedance is constant, regardless of the article 7 located down the impedance blocker 14. The impedance controlled receiver circuit 42 which is located down the impedance blocker 14, advantageously comprises a set of at least one other protection unit, such as an over voltage protection unit, a reverse voltage protection unit, an electrostatic discharge protection unit.

In that way, the voltage curve across one of the charging surface (2, 3) can be calibrated by the predetermined value of the equivalent impedance between both power terminals (5, 6) (calibration step).

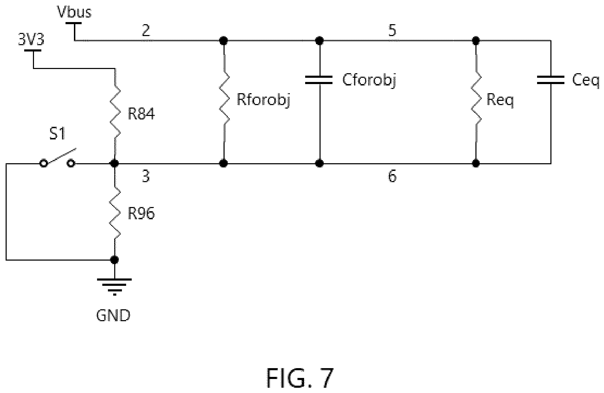

Figure 7 schematically illustrates an equivalent circuit of the foreign conductive object 12 in parallel with the set of at least one other protection unit.

The foreign conductive object 12 has an equivalent resistance $R_{forobj}$ and an equivalent capacitance $C_{forobj}$, whereas the set of at least one other protection unit has an equivalent resistance Req and an equivalent capacitance Ceq.

Resistors R84 and R96 are composing the Thevenin impedance adapter. Resistor R84 is arranged between the negative charging surface 3 and a predetermined voltage such as 3V3. Resistor R96 is arranged between the negative charging surface 3 and GND. A similar Thevenin impedance adapter may be arranged on the positive charging surface 2, with the required adaptations.

The switch S1 is located on the GND line (cf. figure 2), so as to put the negative charging surface 3 in the determined impedance state (for example by doing it cyclically).

When the charging device 1 places the negative charging surface 3 in the determined impedance state, the Thevenin impedance adapter 39 (resistors R84 and R96) is still connected to the charging surface 3.

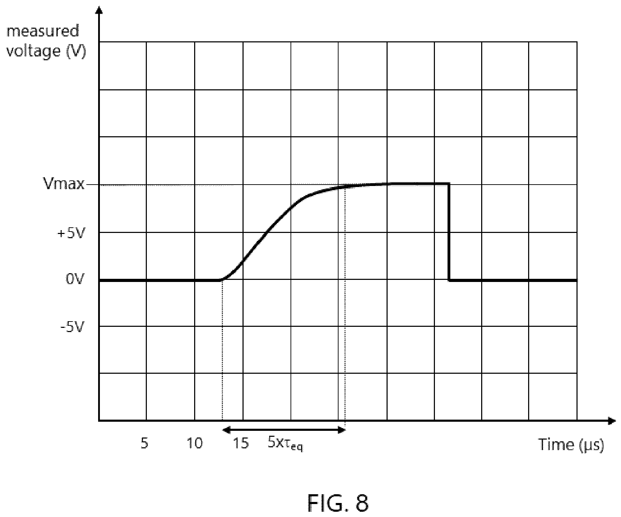

Figure 8 illustrates the voltage curve of the negative conductive charging surface when there is no foreign conductive object 12, during one cycle of switching off the switch S1 for the negative charging surface, which is otherwise connected to GND.

The negative tile voltage curve has local maxima and minima, but it can be interpolated so as to match the capacitor voltage step response of a RC circuit, with a time constant $\tau_{eq}$ which equals Req x Ceq. The time constant $\tau$ can be easily computed by sampling the negative tile voltage. It is reminded that V = Vmax when t = $5\tau_{eq}$ (V = Vmax is an approximation, since V = 0,993 x Vmax), V being the measured voltage, and Vmax being the asymptotic value of the voltage, which can be computed based on the plateau of the curve.

$$Vmax = V_{bus} \times \cfrac{R_{96}}{R_{96} + \cfrac{1}{1 + \cfrac{1}{R_{84}} + \cfrac{1}{R_{forobj}} + \cfrac{1}{R_{eq}}}}$$

The calibration of the invented method is done once and for all when there is no foreign conductive object 12 on the conductive charging surfaces, or it can be done on a regular basis, so as to take the component's ageing into account.

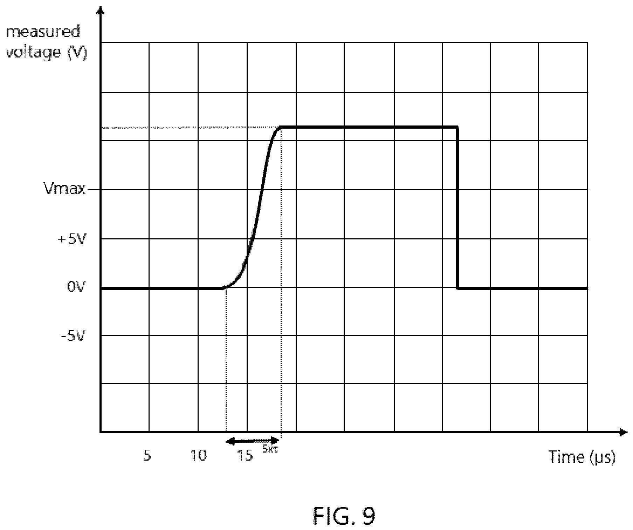

Figure 9 illustrates the voltage curve of the negative conductive charging surface when a foreign conductive object 12 having an equivalent resistance of 1 k$\Omega$ is placed between two conductive charging surfaces.

The time constant $\tau$ can be computed for example by considering the fact that V = $V_0$ when t = $5\tau$. Thus, when the voltage reaches the plateau, a time interval between the start of the rise of the curve and the start of the plateau is determined, which equals $5\tau$.

Considering that $\tau = (Ceq + C_{forobj})/(1/Req + 1/R_{forobj})$, it can be determined that a foreign conductive object 12 is present on the conductive charging surfaces if the value of $\tau$ is different from the calibration value $\tau_{eq}$. There is no need to compute the values of $R_{forobj}$ and $C_{forobj}$; what is essential is the computation of the time constant or of the asymptotic voltage, so as to assess if it is different from the calibration value.

In another embodiment, an average value of the voltage across the charging surface 3 may also be computed, and compared to the value during the calibration step.

In the case of figure 9, the foreign conductive object 12 is a resistor, which explains that the maximum curve value is higher than the maximum curve value of the voltage curve of the negative conductive charging surface when there is no foreign conductive object 12 (figure 8).

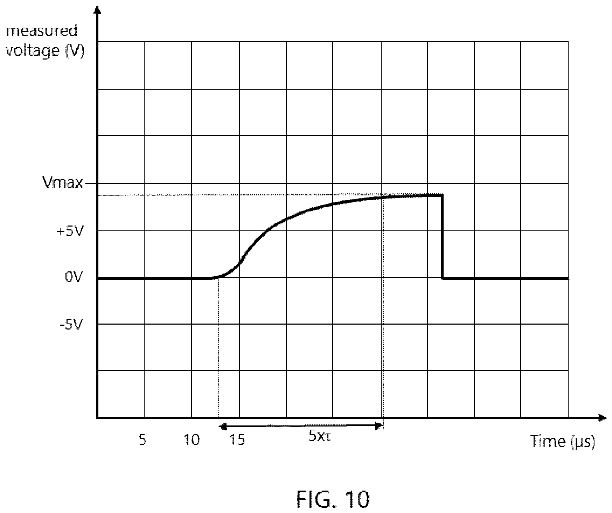

Figure 10 illustrates the voltage curve of the negative conductive charging surface when an exclusive capacitive foreign conductive object 12 is located on the charging surfaces. The maximum curve value is identical than the maximum curve value of the calibration curve of figure 8, but the slope is steeper. Thus, the value of $\tau$ is different than $\tau_{eq}$, which indicates the presence of a foreign conductive object 12.

In a preferred embodiment of the invention, it may be decided that a foreign conductive object 12 is present if $\tau \neq \tau_{eq}$. A tolerance margin may be used, for example of 10 %, so as to take the measurement noise into account.

The disconnection of the conductive charging surface may be cyclically implemented, which is transparent for the operational unit, as described above. Besides, the method does not require any modification of the hardware. The coupling manager 34, in particular the charging processor, 8 can be updated so as to cyclically send a switching signal on the GND line or on Vbus.

If the coupling manager 34 determines that a foreign conductive object 12 is located on the charging surfaces of the charging device 1, based on the comparison of the voltage temporal evolution with regards to the calibration voltage temporal evolution, the coupling manager 34 may break the charging process, until the foreign conductive object 12 is removed.

According to another embodiment, the charging device 1 comprises a current surge protection circuit 9 which is configured to stop providing said current if a foreign conductive object 12 is located on the charging surfaces (2, 3), based on a time derivative of said current.

The current surge protection circuit 9 is connected on the GND line, as illustrated on figure 2. The line which connects the current surge protection circuit 9 to the conductive charging surface is referred to as PGND, as illustrated on figure 1.

When a foreign conductive object 12 is located on the charging surfaces, an overcurrent generation which is due to the foreign conductive object 12 must be quickly detected. The invention takes advantage of the fact that electronic devices such as laptops or Smartphones are equipped with a "slow start" hardware that makes their consumption smoothly increase toward its maximum.

Therefore, the current surge protection circuit 9 detects sudden current surges, and interrupts the GND line if need be. A sudden current surge of 3 A, for example, may be detected, even though the device to be charged nominally requests more than 3 A. Thus, the device is not disconnected systematically when current is drawn.

Thus, a foreign conductive object 12 may be distinguished from the article 7, since the foreign conductive object 12 immediately consumes a nominal current, corresponding to its equivalent resistances. Consequently, the time derivative of the current is very strong, with a steep slope which will trigger the interruption of the charging process before the appearance of visible heating phenomenon such as sparks, i.e. within a time lapse of less than 200 ns.

Instead of using a resistor as a shunt, the device uses an inductor. The voltage across the inductor 29 is used as a feedback reaction in order to break the charging process.

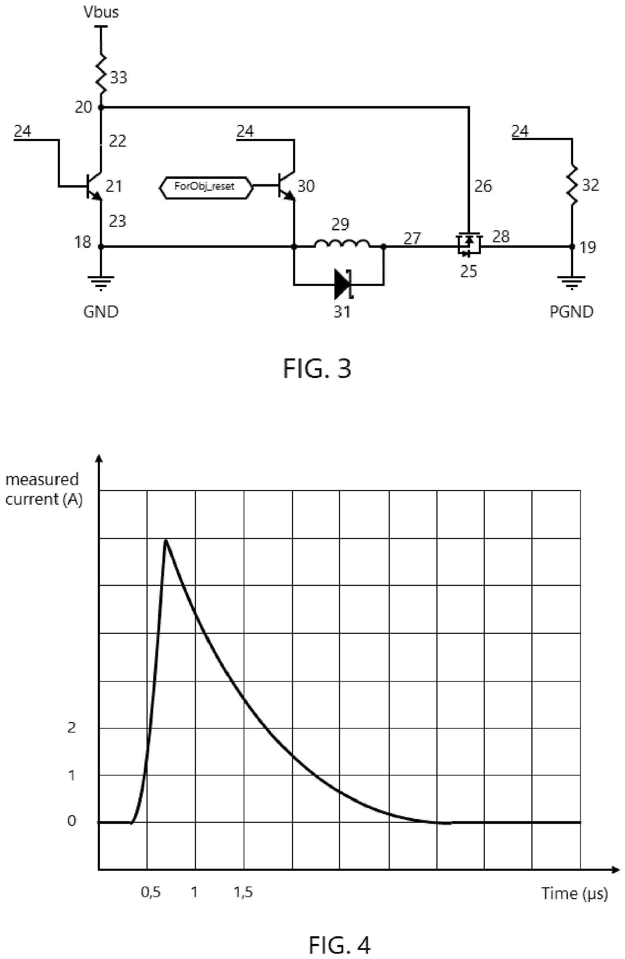

Figure 3 illustrates an implementation of the current surge protection circuit 9. In what follows, the charging surface which is polarized with the supply signal Vbus is referred to as positive charging surface 2, and the other charging surface, which is connected to ground PGND, is referred to as negative charging surface 3.

A first node 18 is electrically connected to ground GND, a second node 19 is electrically connected to the negative tile 3, and a third node 20 is polarized by the supply signal Vbus through a pull-up resistor 33.

The inductor 29 reacts to a current increase going through PGND. If a foreign conductive object 12 with a sufficiently low resistance is placed between the positive charging surface 2 and the negative charging surface 3, it will generate a significant current surge. Thus, the voltage across the inductor 29 sensibly increases, which is proportional to the time derivative of the current across the foreign conductive object 12.

The current surge protection circuit 9 comprises a first switch 21 which is switched on when the voltage across the inductor 29 is high enough to generate a gate current going into the first switch 21 which is higher that its threshold current.

The resistor 33 maintains a positive voltage on the collector 22 of the first switch 21. A high voltage on the first output electrode 23 of the first switch 21, compared to the voltage on the first input electrode 22, will let the current flow between the first node 18 and the third node 20.

In a preferred embodiment, the first switch 21 is a NPN bipolar transistor (or N bipolar transistor). In that case, the first input electrode 22 is a collector, the first output electrode 23 is an emitter, and the first control electrode 24 is a base.

The first input electrode 22 of the first switch 21 is pulled high to the voltage Vbus.

The current surge protection circuit 9 also comprises a second switch 25. The second control electrode 26 is electrically connected to the third node 20. The second output electrode D-25 is electrically connected to the second node 19, and the second input electrode 27 is connected to the inductor 29.

The second switch 25 is switched off when the first switch 21 is switched on, since the absolute value of the voltage between the second control electrode 26 and the second input electrode 27 is lower than the gate voltage Vgsth. Closing the second switch 25 disconnects the negative charging surface 3 with regards to the GND line, and stops the charge. In figure 4, we can see that approximately 300 ns after the foreign object is placed, the current curve goes down again.

The second switch 25 may be an NPN-type MOSFET transistor. In that case, the second control electrode 26 is a gate, the second input electrode 28 is a source, and the second output electrode 27 is a drain.

A resistor 32 is also electrically connected between the second node 19 (PGND) and the first control electrode 24 of the first switch 21, so as to make the first switch 21 switch when the voltage across the inductor 29 goes above a certain threshold.

As illustrated by figure 4, which depicts the current in the negative tile, which is measured by a multimeter, the current curve rises suddenly when a foreign conductive object 12 with low resistance (3.5 $\Omega$ in the example of figure 4) lies on the conductive surfaces, and the PGND voltage increases proportionally to the time derivative of the current curve. Then, it takes 3,5 $\mu$s to completely eliminate the overcurrent of 6 A due to the presence of the foreign conductive object 12. This is due to remanent inductive energy in the charging path (cable, cooper lines etc.).

The first switch 21, the second switch 25, the inductor 29 and the resistor 32 are dimensioned so that the provision of the current is stopped for a foreign conductive object 12 having an equivalent resistance up to a predefined value.

The skilled person may choose components for preventing the appearance of visible phenomenon such as sparks in less than 300 ns, for a foreign conductive object 12 having an equivalent resistance lower than 40 $\Omega$, under a voltage Vbus of 20 V. In particular, the resistors and inductor values may be selected in order to compensate intrinsic parameters of the first and second switch.

The current surge protection circuit 9 advantageously does not comprise any capacitors on PGND lines, other than the parasitic ones, thus it does not store any energy which would otherwise be released, thereby provoking visible phenomenon such as sparks.

Once the protection has been activated, it needs to be reset, so that the charging process would not be delayed.

The current surge protection circuit 9 may include a third switch 30 which switches off the first switch 21, thus the second switch 25 is switched on, once the foreign conductive object 12 has been removed from the conductive charging surfaces, allowing the current to flow again between GND and PGND.

The third switch 30 may be a bipolar NPN transistor. Its collector is electrically connected to the first control electrode 24 of the first switch 21, and its emitter is electrically connected to the first node 18.

The charging processor 8, which is illustrated by figure 2, may have an output (ForObj_reset, figure 3) connected to the base of the third switch 30. The charging processor 8 may receive the information of removal of the foreign conductive object 12 based on a sensing means, or based on external communication. For example, the user may indicate to the charging processor 8 that the foreign conductive object 12 has been removed. Alternatively, a matrix detection system may be used, such as the one disclosed in the document EP 3 425 764 A1.

Alternatively, the charging device 1 may include a timer for controlling the reset of the current surge protection circuit 9. The timer may be advantageously managed by the coupling manager 34.

When the current which flows between the first node 18 and the second node 19 is suddenly interrupted, the inductor 29 has a sudden decrease of current over time (going from 7A to 0A for example), so it compensates it with a negative voltage (derivative is negative). Thus, the voltage may go very low and could damage the first switch 21.

In order to avoid that, a freewheeling diode 31 may be connected across the inductor 29, the anode being connected to the first node 18, and the cathode being connected to the second input electrode 27 of the second switch 25. By this, the reverse current is allowed to flow through the diode 31 and dissipates.

In a preferred embodiment, the diode 31 is a Schottky diode, since it has a particularly low forward voltage drop and a very fast switching behavior in reverse bias.

The first embodiment (method) and the second embodiment (current surge protection circuit) can be combined.

Indeed, the current surge protection circuit reacts quickly, and the charging process is interrupted, if the equivalent resistance of the foreign conductive object 12 is smaller than a predefined value, for example 40 $\Omega$. Beyond the predefined value, it is unlikely that visible phenomenon such as sparks may be generated: under a voltage of 20 V, the current which would flow in the foreign conductive object 12 would be less than 500 mA, which may not be sufficient to generate visible phenomenon such as sparks (i.e. visible to the human eye). However, the charging process would still be interrupted, based on the first embodiment.

The invention also relates to a method for transferring power supply information from the reporting device 4 to the charging device 1.

The method comprises a first step a') of charging an article according to predefined power supply requirements, the article being charged by the charging device 1 through the reporting device 4. For sake of brevity, the operation mode for charging the article is not repeated, and the skilled person may refer to what precedes.

In a second step b'), one of the charging surfaces (2, 3) is put in a determined impedance state, by using the switch S1. Putting the negative charging surfaces in the determined impedance state is preferred, since switching on and off the GND line has less consequence on the charging process than switching on and off Vbus.

The charging surfaces (2, 3) are advantageously cyclically put in a determined impedance state.

As indicated above, when the charging surface is disconnected, the coupling manager 34 acquires the voltage evolution of the disconnected charging surface, which depends on the equivalent resistance Req and the equivalent capacitance Ceq of the set of at least one other protection unit (cf. figure 7).

According to the method, the reporting device 4 comprises a set of at least one extra component such as a capacitor and/or a resistor, which can be dynamically and sequentially connected between the electrodes (5, 6), upstream from the impedance blocker 14.

Depending on the selected extra component, the voltage curve of the disconnected charging surface will be different in the determined impedance state, thus the time constant $\tau$ and the maximum voltage Vmax will be different.

If the article 7 dynamically needs, during the charging process, to modify the power supply requirements (for example the required voltage, the voltage range, the peak current), it may accordingly advise the receiver circuit 40 of the reporting device 4, which in turn selects an extra component.

In another embodiment, the reporting device 4 changes its impedance towards the power terminals (5, 6), possibly according to a determined sequence, this impedance change being measured by the charging device to determine the modify power supply requirements.

Any other information going from the article 7 to the charging device 1 during the charge, can be transferred this way.

Therefore, the charging features can be dynamically adapted.

It will be understood that the invention is not specific to plate charging surfaces. It might work equally with any two pin power supply connection.

**Claims**

1. Method for detecting the presence of a foreign conductive object (12) on the charging surfaces of a charging device (1), said charging surfaces (2, 3) being configured to cooperate with a reporting device (4) equipped with at least two power terminals (5, 6) so as to have a contact between the reporting device's power terminals (5, 6) and at least two charging device's charging surfaces (2, 3), the method comprising the steps of :

   a) providing an appropriate power to the conductive charging surfaces (2, 3) so as to charge an article (7) connected to the reporting device (4);
   b) while providing said appropriate power, putting one of said charging surfaces (2, 3) in a determined impedance state, and measuring a voltage temporal evolution across one of said charging surfaces (2, 3) while one of said charging surfaces (2, 3) is put in said determined impedance state; the presence of the foreign conductive object (12) being determined based on said measure.

2. Method according to claim 1, wherein the charging device (1) is configured to provide a supply signal (Vbus) to one of the charging surfaces, referred to as positive charging surface (2), and to connect the other charging surface, referred to as negative charging surface (3), to ground (GND), the supply signal (Vbus) having a potential which is higher than the potential of the ground (GND), wherein the negative charging surface (3) is put, while providing said appropriate power, in a determined impedance state, while applying a determined voltage source on the positive charging surface (2) which is not put in a determined impedance state.

3. Method according to any of the preceding claims, comprising a preliminary calibration step of measuring a calibration voltage temporal evolution across said charging surfaces (2, 3) while one of said charging surfaces (2, 3) is put in said determined impedance state without any foreign conductive object (12), the presence of the foreign conductive object (12) being determined in step b) based on a comparison of the voltage temporal evolution with regards to the calibration voltage temporal evolution.

4. Method according to any of the preceding claims wherein a curve of a RC-type circuit is interpolated based on the voltage temporal evolution across the negative charging surface (3), an equivalent resistance (Rforobj) of the foreign conductive object (12) being derived from the curve in the permanent regime of the curve, an equivalent capacitance (Cforobj) of the foreign conductive object (12) being derived from the curve in the transient regime of the curve.

5. Method according to any of the preceding claims, wherein the reporting device (4) comprises an impedance blocker (14), and an impedance controlled circuit (42), said impedance controlled circuit (42) being connected between the impedance blocker (14) and the power terminals (5, 6), the method comprising a preliminary step of determining an equivalent resistance of said impedance controlled circuit (42) and an equivalent capacitance of said impedance controlled circuit (42), the equivalent resistance (Rforobj) of the foreign conductive object (12) and the equivalent capacitance (Cforobj) of the foreign conductive object (12) being computed based on the equivalent resistance (Req) of said impedance controlled circuit (42) and based on the equivalent capacitance (Ceq) of said impedance controlled circuit (42).

6. Method according to any of the preceding claims, wherein, in step b), the charging surface (2, 3) is disconnected during a predetermined time span which is such that the charge of the article (7) is not stopped while the charging surface (2, 3) is disconnected.

7. Method for transferring power supply information from a reporting device (4) comprising two power terminals (5, 6) to a charging device (1) equipped with charging surfaces (2, 3), during the charge of an article (7) connected to the reporting device (4), said charging surfaces (2, 3) being configured to cooperate with the power terminals (5, 6) so as to have a contact between them, the method comprising the steps of:

   a') charging an article (7) according to predefined power supply requirements, the article (7) being charged by the charging device (1) through the reporting device (4);
   b') while charging the article (7), modifying the predefined power supply requirements by putting one of said charging surfaces (2, 3) in a determined impedance state, the reporting device (4) modifying its impedance towards the power terminals (5, 6), the modification of the impedance depending on the power supply requirements to be modified, and measuring a voltage temporal evolution across the charging surfaces (2, 3) while one of said charging surface (2, 3) is in said determined impedance state.

8. Method according to claim 7, wherein the charging device (1) is configured to provide a supply signal (Vbus) to one of the charging surfaces, referred to as positive charging surface (2), and to connect the other charging surface, referred to as negative charging surface (3), to ground (GND), the supply signal (Vbus) having a potential which is higher than the potential of the ground (GND), wherein the charging device is configured to disconnect the negative charging surface (3) from the ground (GND), while applying a determined voltage source on the positive charging surface (2) which is not put in a determined impedance state.

9. Method according to any of claims 7 or 8, comprising a preliminary calibration step of measuring at least one calibration voltage temporal evolution across said charging surfaces (2, 3) while said charging surfaces (2, 3) is put in said determined impedance state with a corresponding resistor and/or a capacitor across the power terminals (5, 6).

10. Method according to any of claims 7 to 9, wherein a curve of a RC-type circuit is interpolated based on the voltage temporal evolution across the negative charging surface (3), an equivalent resistance of the resistor being derived from the curve in the permanent regime of the curve, and/or an equivalent capacitance of the capacitor being derived from the curve in the transient regime of the curve.

11. Method according to any of claims 7 to 10, wherein the reporting device (4) comprises an impedance blocker (14), and an impedance controlled circuit (42), said an impedance controlled circuit (42) being connected between the impedance blocker (14) and the power terminals (5, 6), the method comprising a preliminary step of determining an equivalent resistance of said impedance controlled circuit (42) and an equivalent capacitance of said impedance controlled circuit (42), the equivalent resistance of the resistor and/or the equivalent capacitance of the capacitor being computed based on the equivalent resistance of said impedance controlled circuit (42) and based on the equivalent capacitance of said impedance controlled circuit (42).

12. Method according to any of claims 7 to 11, wherein, in step b'), the modification of the impedance of the reporting device (4) towards the power terminals (5, 6) is implemented according to a predefined sequence.

13. Method according to any of the preceding claims, wherein the determined impedance state is a high impedance state.

14. A computer program product comprising computer-executable instructions to cause a computer system to carry out a method according to any of the preceding claims.

15. Charging device (1), comprising a plurality of conductive charging surfaces (2, 3) configured to cooperate with a reporting device (4) equipped with at least two power terminals (5, 6) so as to have a contact between the reporting device's power terminals (5, 6) and at least two charging device's charging surfaces (2, 3), the charging device (1) being configured to provide an appropriate power to an article (7) through the reporting device (4), said charging device (1) being configured to put one of said charging surfaces (2, 3) in a determined impedance state while providing said appropriate power, said charging device (1) comprising a voltage measure circuit (35) to measure a voltage temporal evolution across said charging surfaces (2, 3) while one of said charging surfaces (2, 3) is put in said determined impedance state, said charging device (1) being configured to detect the presence of a foreign conductive object (12) on the charging device's charging surfaces (2, 3) based on said measure.

16. Charging device (1) according to claim 15, comprising a Thevenin impedance adapter (39).

17. System for transferring power supply information from a reporting device (4) to a charging device (1), said reporting device (4) being configured to be connected to an article (7) so as to charge said article (7) and comprising two power terminals (5, 6), said charging device (1) being equipped with charging surfaces (2, 3), said charging surfaces (2, 3) being configured to cooperate with the power terminals (5, 6) so as to have a contact between them, the charging device (1) being configured to put one of said charging surfaces (2, 3) in a determined impedance state while charging the article (7), the reporting device (4) modifying the predefined power supply requirements by putting one of said charging surfaces (2, 3) in a determined impedance state, the reporting device (4) being configured to modify its impedance towards the power terminals (5, 6), possibly at any time during charge, the modification of the impedance depending on a power supply requirements to be modified, the charging device (1) being configured to measure a voltage temporal evolution across the charging surfaces (2, 3) while one of said charging surfaces (2, 3) is in said determined impedance state.

FIG. 1

FIG. 2

FIG. 3

FIG. 4

FIG. 5

FIG. 6

FIG. 7

FIG. 8

FIG. 9

FIG. 10

Europäisches
Patentamt

European
Patent Office

Office européen
des brevets

# EUROPEAN SEARCH REPORT

Application Number

EP 21 30 5867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/234363 A1 (YOON SUNG-GEUN [KR] ET AL) 20 August 2015 (2015-08-20) | 1,6, 13-15 | INV. H02J7/00 |
| A | * figures 9,10 * <br> * paragraphs [0103] – [0110] * | 2-5,16 | |
| A | EP 1 850 443 A2 (HITACHI KOKI KK) 31 October 2007 (2007-10-31) * paragraphs [0004], [0015] – [0017]; figure 5 * | 1-6, 13-16 | |
| A | EP 3 618 169 A1 (NICOVENTURES HOLDINGS LTD [GB]) 4 March 2020 (2020-03-04) * paragraphs [0047], [0093] – [0100] * | 1-6, 13-16 | |
| A | EP 3 093 945 A1 (MEDIATEK INC) 16 November 2016 (2016-11-16) * paragraphs [0001] – [0027]; figures 3,6 * | 1-6, 13-16 | |

TECHNICAL FIELDS
SEARCHED      (IPC)

H02J

The present search report has been drawn up for all claims

| Place of search | Date of completion of the search | Examiner |
|---|---|---|
| Munich | 17 November 2021 | Berger, Josef |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................
& : member of the same patent family, corresponding
    document

EPO FORM 1503 03.82 (P04C01)

Europäisches
Patentamt

European
Patent Office

Office européen
des brevets

**Application Number**

**EP 21 30 5867**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 13-16

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

**Application Number**

**EP 21 30 5867**

The Search Division considers that the present European patent application does not comply with the requirements of unity of invention and relates to several inventions or groups of inventions, namely:

```
1. claims: 1-6, 13-16

   Method for detecting the presence of a foreign conductive
   object on charging curfaces of a charging device
                       ---


2. claims: 7-12, 17

   Method for transferring power supply information from a
   reporting device to a charging device
                   ---
```

## ANNEX TO THE EUROPEAN SEARCH REPORT
## ON EUROPEAN PATENT APPLICATION NO.

EP 21 30 5867

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2021

| Patent document cited in search report | | Publication date | Patent family member(s) | | Publication date |
|---|---|---|---|---|---|
| US 2015234363 | A1 | 20-08-2015 | KR | 20150098381 A | 28-08-2015 |
| | | | US | 2015234363 A1 | 20-08-2015 |
| EP 1850443 | A2 | 31-10-2007 | CN | 101064441 A | 31-10-2007 |
| | | | EP | 1850443 A2 | 31-10-2007 |
| | | | JP | 4618561 B2 | 26-01-2011 |
| | | | JP | 2007300730 A | 15-11-2007 |
| | | | US | 2007252558 A1 | 01-11-2007 |
| EP 3618169 | A1 | 04-03-2020 | CN | 107210496 A | 26-09-2017 |
| | | | CN | 110380145 A | 25-10-2019 |
| | | | EP | 3175506 A1 | 07-06-2017 |
| | | | EP | 3618169 A1 | 04-03-2020 |
| | | | ES | 2767398 T3 | 17-06-2020 |
| | | | GB | 2528712 A | 03-02-2016 |
| | | | GB | 2559281 A | 01-08-2018 |
| | | | PL | 3175506 T3 | 13-07-2020 |
| | | | RU | 2019105643 A | 29-03-2019 |
| | | | US | 2017214261 A1 | 27-07-2017 |
| | | | US | 2019157887 A1 | 23-05-2019 |
| | | | US | 2020127478 A1 | 23-04-2020 |
| | | | US | 2021135470 A1 | 06-05-2021 |
| | | | WO | 2016016619 A1 | 04-02-2016 |
| EP 3093945 | A1 | 16-11-2016 | CN | 106169783 A | 30-11-2016 |
| | | | EP | 3093945 A1 | 16-11-2016 |
| | | | US | 2016336761 A1 | 17-11-2016 |

EPO FORM P0459

For more details about this annex : see Official Journal of the European Patent Office, No. 12/82

**REFERENCES CITED IN THE DESCRIPTION**

**Patent documents cited in the description**

- WO 2017046458 A1
- WO 2013036947 A2

- EP 3425764 A1

**Non-patent literature cited in the description**

- *Advantages of IC-Based Hot-Swap Circuit Protection,* *https://www.maximintegrated.com/en/design/technical-documents/tutorials/2/2158.html*